# EUROPEAN PATENT SPECIFICATION

(11) **EP 1 794 033 B1**
(45) Date of publication and mention of the grant of the patent: **07.10.2009**
(21) Application number: 05784329.4
(22) Date of filing: 24.08.2005
(51) Int. Cl.: B60R 19/18, B60R 19/02

(54) **BEAM, AND METHOD FOR MAKING SUCH BEAM**
TRÄGER UND VERFAHREN ZUR HERSTELLUNG SOLCH EINES TRÄGERS
POUTRE ET PROCEDE DE REALISATION DE LADITE POUTRE

(30) Priority: 27.08.2004 NO 20043579
(43) Date of publication of application: 13.06.2007
(73) Proprietor: Pedersen, Torbjørn, 2830 Raufoss (NO)
(72) Inventor: Pedersen, Torbjørn, 2830 Raufoss (NO)
(74) Representative: Tofting, Arild
(86) International application number: PCT/NO2005/000307
(87) International publication number: WO 2006/022555

(56) References cited:
- EP-A- 0 908 356
- EP-A- 1 193 135
- EP-A1- 0 908 356
- EP-A1- 1 193 135
- WO-A-20/05061146
- WO-A1-20/05061146
- US-A- 6 141 935
- US-A- 6 141 935
- US-A1- 2002 023 333
- US-A1- 2002 023 333
- US-A1- 2004 130 166
- US-A1- 2004 130 166
- US-B1- 6 305 201
- US-B1- 6 305 201

## Description

The present invention relates to an impact-absorbing member for impact protection of a vehicle where the impact-absorbing member is made from a work piece comprising a hollow profile provided with walls and an inner space and a method for reinforcing such impact absorbing member.

It is known to make impact beams for vehicles in many different designs. Impact beams can for example be made from a hollow profile provided with at least two sidewalls and a front wall. In a crash situation, the walls will collapse following predestined patterns in the profile sidewalls and thereby absorb a controllable amount of energy. To improve the energy absorption of the impact beam, it is also known to arrange several chambers in the length axis of the beam separated by internal walls in the beam.

Such impact beam is known from EP 1015277 B1. The design is especially suitable for extruded profiles. The use of longitudinal chambers enables a design where the same improved deformation pattern is obtained across the length of the beam. However, there is an increasing awareness over the fact that the impact behaviour of a vehicle demands a changing deformation performance along the length axis of a beam.

It is also known to produce crash boxes from extruded work pieces. The extruded blank is cut in smaller work pieces, the sidewalls of the work piece are folded to form a box, and thereafter welded to the part of the work piece forming the end plate part. The crash boxes made by such method have the same limitation in design as the beams described above. The sidewalls are folded during the production process and it is often necessary to do extra forming or other processing steps to improve the deformation behaviour of the crash box. This can increase the plurality and complexity of the production steps for making a crash box and consequently high production costs can occur.

US 6 141 935 is considered to form the most relevant state of the art from which the invention departs. This reference discloses a structural member that has in its cross-sectional plane at least two closed hollow-section chambers. The member is produced by rolling forming and is provided with an internal web that separates the interior of the member in two chambers. The present invention differs from this solution in that the impact absorbing member is made from a work piece comprising a hollow profile provided with walls and an inner space.

US 6 305 201 discloses a method and apparatus for forming unobstructed holes in a hydroformed metal part that employs a punch having a pheripheral side conforming to the desired hole shape and an end face having a central cutting edge with a high point that contacts on closure of a hydroforming die with an unsupported wall section of the part initiating a stress riser therein. The resulting lips formed are created to avoid loose metal pieces to be produced during the punching of holes.

WO 2005/061146 published after the present priority date, discloses a method and device for reinforcing a hollow section with a sealed periphery. An opening is created in the periphery of said section and a reinforcement component is introduced into the interior of the hollow section.

The object of the present invention is to present a method for producing impact beams or improving existing impact beams without the need of welding seams or complicated and expensive fabrication methods. It is also an object to present a method for locally enforcing an impact beam without modification of the overall structure of the beam. Furthermore, it is an object to present an impact beam, which is easy to construct, and which has an improved deformation performance. Thus, there has been designed a reinforced impact absorbing member that is more lightweight and costeffective in production.

This is done by cutting at least a part of a wall of a work piece in such a way that it is forming a lip and where the lip is bent into the inner space of the work piece, thereby forming at least one additional reinforcing wall or protrusion.

The invention will now be further explained by figures where
- Figs. 1a and 1b: show a first step in the process of forming a reinforcement lip in a work piece,
- Figs. 2a and 2b: show a second step in the process of forming of a reinforcement lip in a work piece,
- Figs. 3a and 3b: show a third step in the process of forming a reinforcement lip in a work piece,
- Figs. 4a and 4b: show an optional fourth step in the process of forming a reinforce-ment lip in a work piece,
- Fig. 5: shows a first embodiment of an impact-absorbing member provided with one lip in a side view,
- Fig. 6: shows an second embodiment of an impact absorbing member provided with two lips in a cross sectional view,
- Figs. 7a and 7b: show a first embodiment of a beam provided with lips,
- Figs. 8a and 8b: show a second embodiment of a beam provided with lips,
- Figs. 9a and 9b: show a third embodiment of a beam provided with lips,
- Fig. 10: shows a reinforced impact absorbing assembly.

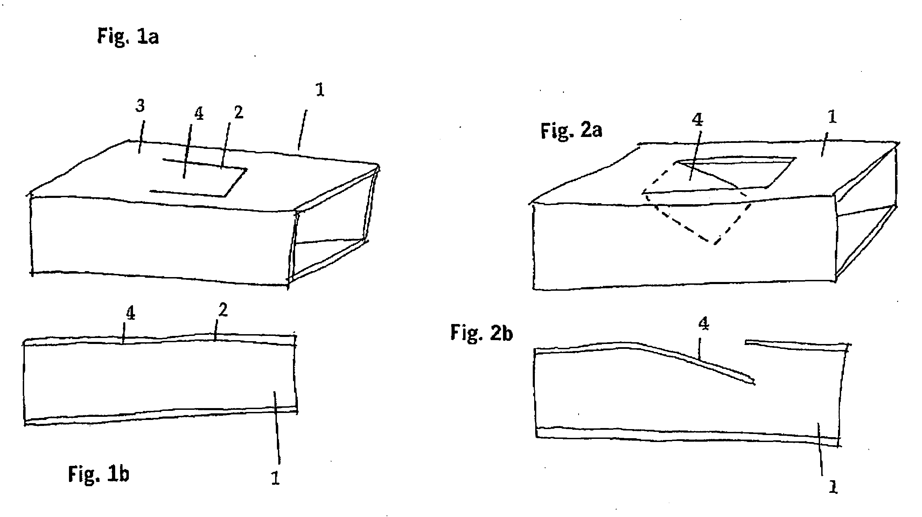

The present invention presents a simple and efficient method for the reinforcement of a work piece, preferably a hollow profile. Figs. 1 a and b show a first step in the process of forming a reinforcement lip in a work piece. Fig. 1a shows a work piece 1 in a perspective view. Fig. 1b shows the same work piece in a cross sectional side view. A cut is made in a wall 3 of the work piece 1. The cut 2 is made in such a way that it will form a lip 4 if the wall material inside the cut 2 is bent away from the wall surface. The cut can e.g. be made by cutting with a tool or by punching or stamping out a section of the wall.

Figs. 2a and 2b show a second step in the process of forming a reinforcement lip in a work piece. Fig. 2a shows the work piece 1 in a perspective view during a forming operation. Fig. 2b shows the same work piece in a cross sectional side view. The lip 4 will normally be bent into the work piece 1.

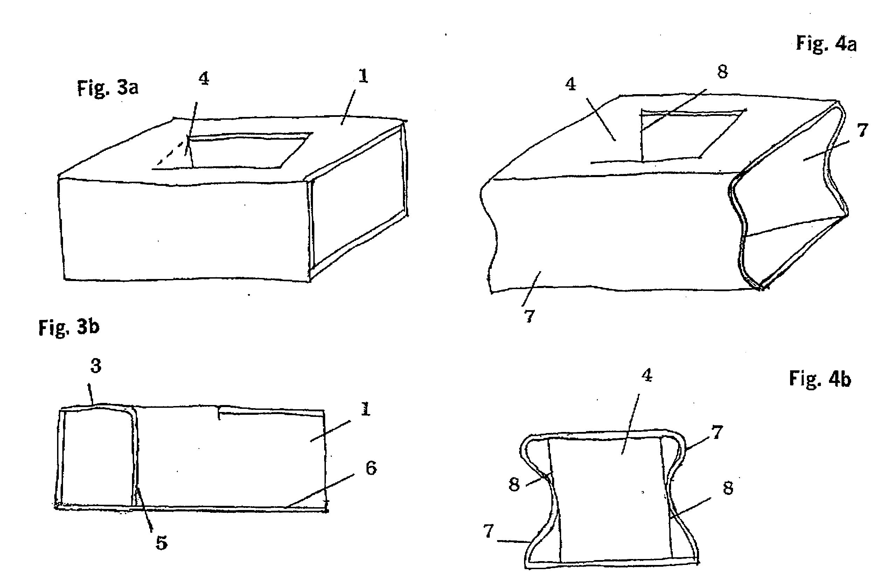

Figs. 3a and 3b shows a third step in the process of forming a reinforcement lip in a work piece. Fig. 3a shows the work piece 1 with a lip 4 in a perspective view. Fig. 3b shows the same work piece 1 in a cross sectional side view. The cut can be made in such a way that the lip end section 5 will be fixed inside the work piece 1 by being bent into contact with an opposing inner surface 6 of a wall. In the present examples, the lip is bent until it is situated perpendicular to the wall 3 from which it is bent.

The cutting and bending operation can also be made in one single step. One or more lips can be punched out from one or more walls and simultaneously bent away from the wall surface.

Figs. 4a and 4b show an optional fourth step in the process of forming a reinforcement lip in a work piece. As an additional operation, the sidewalls 7 perpendicular to the wall being cut can be pressed inwards against the side edges 8 of the lip 4. This is shown on Fig. 4 a in a perspective view and on Fig. 4b in a cross sectional side view of a work piece. The forming operation stabilises the lip 4 in its final position. The lip can also be fixed by any other method found suitable, such as welding, soldering, brazing, gluing or shaping of the work piece walls in any way fixing the lip in position.

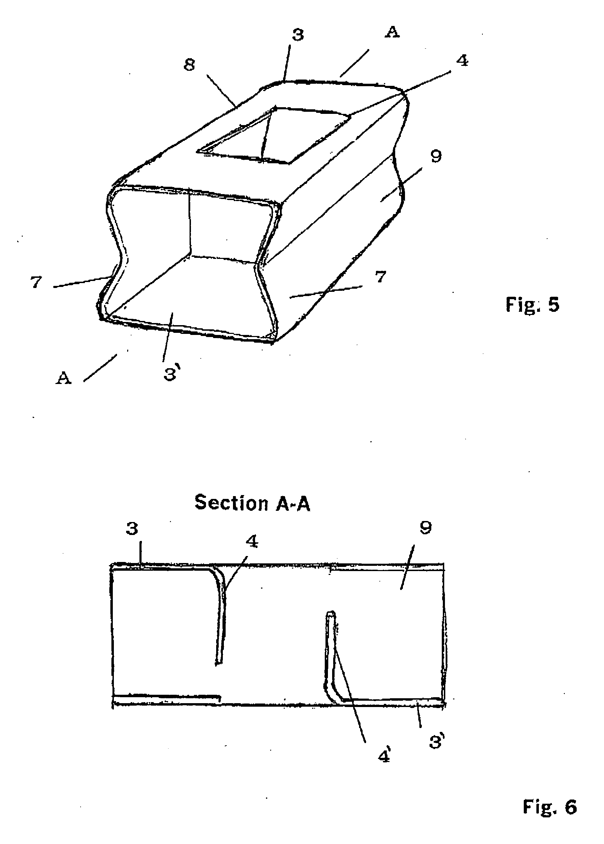

Fig. 5 shows an impact-absorbing member 9 provided with one lip 4 in a perspective view. The lip 4 will be fixed by pressing the sidewalls 7 perpendicular to the surface of the wall 3 being cut, into contact with the side edges 8 of the lip 4.

Fig. 6 shows an example of an impact-absorbing member 9 in a cross sectional side view provided with two lips 4, 4'. The lips 4, 4' are cut in two walls 3, 3' opposing each other. The lips are thereafter bent in such a way that they will form two inner walls opposing each other. The sidewalls of the impact-absorbing member can thereafter be pressed into contact with the side edges of the lips, thereby fixing the lips inside the impact-absorbing member 9.

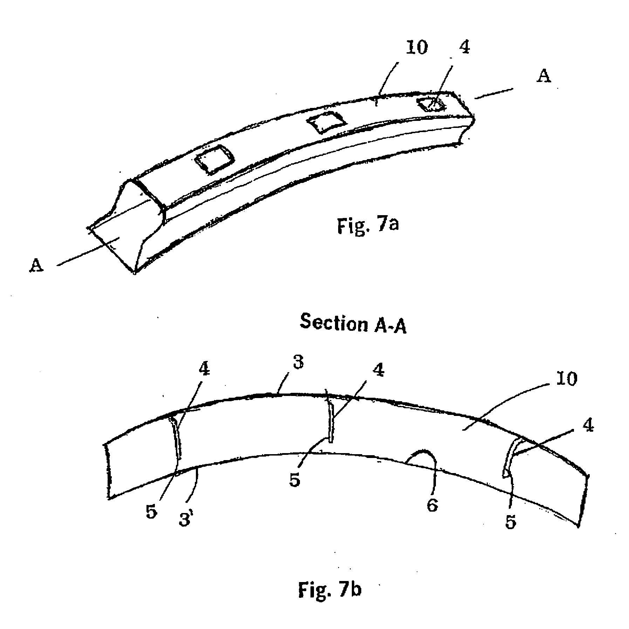

Fig. 7a shows a perspective view of a beam 10 provided with lips 4, 4'. The lips 4, 4' can be made anywhere on the beam 10. There can be as many lips in the beam as found suitable for the beam being designed. Fig. 7b shows the same beam 10 in a cross sectional side view. In the present example, the lips 4, 4' are cut and bent in such a way that they form inner sidewalls in the beam. These sidewalls can reach from the wall 3 being cut and bent down to the inner surface 6 of the opposing wall 3' or as in the present example leave space between the lip end section 5 and the inner surface 6.

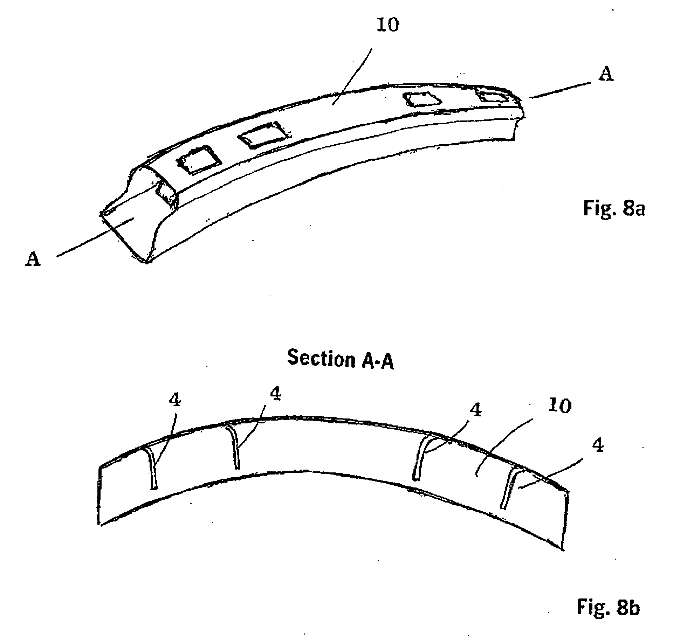

Fig. 8a shows a perspective view of a second example of a beam 10 provided with lips. Fig. 8b shows the same beam 10 in a cross sectional side view. The lips 4, 4' can be formed in regions of the beam. It is known that some areas of a vehicle are more subjected to impact than others. By enforcing the most exposed regions of a beam, it is possible to design a more adapted impact protection of the vehicle and passengers.

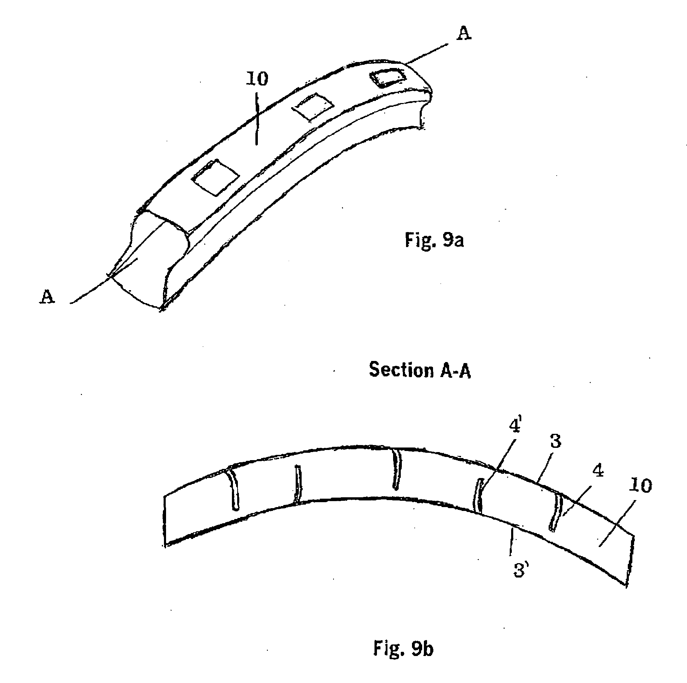

Fig. 9a shows a perspective view of a third example of a beam and Fig. 9b shows the same beam in a cross sectional side view. The beam 10 is provided with lips 4, 4' that are made in two opposing walls 3, 3'. The lips can be made in any wall of a beam. Even if the lips made in the present examples are symmetrically situated on the beam, it is obvious that this is no limitation to where the lips can be made. If this is found suitable, lips can be made in every wall of the beam.

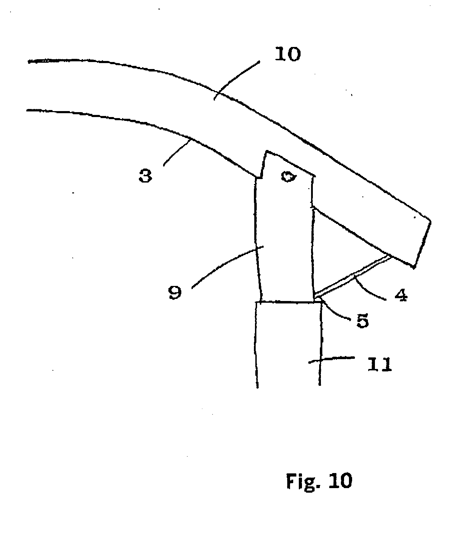

Fig. 10 shows a reinforced impact absorbing assembly. In the vehicle body, side frames 11 are arranged along the length of the vehicle. On the end section of the side frame 11, an impact-absorbing member 9 can be attached to the side frame as an intermediate member between the side frames 11 and a transversal frontal or rear beam 10. The impact-absorbing member 9 will be attached to the end sections of the beam 10.
It can be found suitable to reinforce the frontal or rear side regions of a vehicle to improve the crash performance if the vehicle gets an impact here. This can be done by cutting a lip 4 in the rear wall 3 of the beam. The lip 4 is folded out from the rear wall until the lip end section 5 can be fixed to the impact-absorbing member 9. The lip end section can be fixed to the impact-absorbing member by friction as it is pressed against the member or welded, glued or otherwise mechanically attached to the member.

If the transversal beam is attached directly to the side frame, a lip can be cut in a wall of the beam in such a way that the lip can be folded and fixed to the side frame, thereby reinforcing the side region of the vehicle.

The invention is particularly convenient for the use in impact absorbing members in a vehicle. The invention can be used in crash boxes, transversal beams, side beams or in any other beam subjected to deformation.

The work piece can be made of aluminium or an aluminium alloy, for example as an extruded profile. It is also possible to use the method for members being made from steel members made by rolling or any other method common in the steel processing industry. The method can even be useful in polymer members. The forming operation according to the present invention can be combined with a heat treatment of the work piece.

Even if the present invention is used on closed hollow profiles, it can also be used on open profiles where the lips form an additional reinforcement of the existing walls. The invention can also be used to reinforce members, which will be filled with a second material after the forming operation, such as foam made of polymers or aluminium.

## Claims

1. Impact absorbing member for impact protection of a vehicle where the impact-absorbing member is made from a work piece (1) comprising a hollow profile provided with walls and an inner space,
**characterised in that**
at least a part of at least one wall (3) is cut in such a way that it is forming a lip (4) and where the lip (4) is bent away from the wall, thereby forming at least one additional reinforcing wall.

2. Impact absorbing member according to claim 1,
**characterised in that**
the at least one lip (4) is bent in such a way that it will form at least one internal wall inside the hollow profile.

3. Impact absorbing member according to claim 1 or 2,
**characterised in that**
one lip end section of each lip being made in the work piece is brought into abutment with the wall perpendicular to the wall from which the lip is bent.

4. Impact absorbing member according to any of the preceding claims 1-3,
**characterised in that**
at least one sidewall (7) situated perpendicular to the wall (3) in which the lip (4) is cut, is pressed into contact with at least one side edge (8) of the at least one lip (4) situated inside the inner space of the work piece 1.

5. Impact absorbing member according to any of the preceding claims 1-4,
**characterised in that**
the work piece 1 is made of aluminium or an aluminium alloy.

6. Impact absorbing member according to any of the preceding claims 1-5,
**characterised in that**
the work piece is made from an extruded blank.

7. Method for reinforcing an impact-absorbing member used in a vehicle, the member being made from a work piece (1) comprising a hollow profile provided with walls and an inner space,
**characterised in that**
a cut is made in at least one section of a wall (3) of a work piece (1) thereby forming at least one lip (4), which is bent away from the wall thereby forming at least one additional reinforcing wall.

8. Method according to claim 7,
**characterised in that**
the at least one lip (4) is bent into the inner space of the work piece.

9. Method according to claim 7 or 8,
**characterised in that**
the at least one lip is fixed inside the work piece after the bending operation is performed.

10. Method according to any of the preceding claims 7-9,
**characterised in that**
the work piece is made from an extruded blank, which is cut into smaller work pieces.

## Patentansprüche

1. Stoßabsorbierendes Element für Stoßschutz eines Fahrzeuges, wobei das stoßabsorbierende Element aus einem Werkstück (1) gebildet ist, umfassend ein hohles Profil mit Wänden und einem Innenraum,
**dadurch gekennzeichnet, dass**
mindestens ein Teil von wenigstens einer Wand (3) auf solche Weise geschnitten ist, dass er eine Lippe (4) bildet und dass die Lippe (4) von der Wand weg gebogen ist, und **dadurch** mindestens eine weitere Verstärkerungswand bildet.

2. Stoßabsorbierendes Element nach Anspruch 1, **dadurch gekennzeichnet, dass** die mindestens eine Lippe (4) auf solche Weise gebogen ist, dass sie wenigstens eine inneren Wand im hohlen Profil bilden wird.

3. Stoßabsorbierendes Element nach Anspruch 1 oder 2, **dadurch gekennzeichnet, dass** eine Lippe-Endsektion von jeden Lippen den im Werkstück gebildet werden, bis zum Kontakt mit der Wand gebogen wird, der rechtwinklig zu der Wand ist, von der die Lippe gebogen ist.

4. Stoßabsorbierendes Element nach einem der Ansprüche 1-3, **dadurch**
**gekennzeichnet, dass**
mindestens eine Seitenwand (7), die rechtwinklig zu der Wand (3) in der die Lippe (4) geschnitten ist, bis zum Kontakt mit wenigstens einer Seitenrand (8) der wenigstens eine Lippe (4) gepresst ist, die sich im Innenraum des Werkstücks (1) befindet.

5. Stoßabsorbierendes Element nach einem der Ansprüche 1-4, **dadurch**
**gekennzeichnet, dass**
das Werkstück (1) aus Aluminium oder einer Aluminiumlegierung gebildet ist.

6. Stoßabsorbierendes Element nach einem der Ansprüche 1-5, **dadurch**
**gekennzeichnet, dass**
das Werkstück aus einem extrudierten Rohling gebildet ist.

7. Verfahren für Verstärkung eines in einem Fahrzeug benutzten stoßabsorbierenden Elements, welches Element aus einem ein hohles Profil mit Wänden und Innenraum umfassendes Werkstück (1) gebildet ist,
**dadurch gekennzeichnet, dass**
ein Schnitt in zumindest einer Sektion einer Wand (3) eines Werkstücks (1) gemacht wird, um **dadurch** wenigstens eine Lippe (4) zu bilden, welche Lippe von der Wand weg gebogen wird um **dadurch** wenigstens eine weitere Verstärkerungswand zu bilden.

8. Verfahren nach Anspruch 7,
**dadurch gekennzeichnet, dass**
die wenigstens eine Lippe (4) in den Innenraum des Werkstücks hinein gebogen wird.

9. Verfahren nach einem der Ansprüche 7 oder 8,
**dadurch gekennzeichnet, dass**
die wenigstens eine Lippe (4) innen im Werkstück fixiert ist, nachdem die Biegeoperation verrichtet worden ist.

10. Verfahren nach einem der Ansprüche 7-9,
**dadurch gekennzeichnet, dass**
das Werkstück aus einem extrudierten Rohling gebildet ist, welcher Rohling zu kleineren Werkstücke geschneidet wird.

## Revendications

1. Élément d'absorption de chocs destiné à protéger un véhicule des chocs, dans lequel l'élément d'absorption de chocs est réalisé à partir d'une pièce de fabrication (1) qui comprend un profilé creux doté de parois et d'un espace intérieur,
**caractérisé en ce que :**
au moins une partie d'au moins une paroi (3) est découpée de telle manière qu'elle forme une lèvre (4), la lèvre (4) étant pliée à partir de la paroi, en formant de ce fait au moins une paroi de renfort supplémentaire.

2. Élément d'absorption de chocs selon la revendication 1,
**caractérisé en ce que :**
la ou les lèvres (4) sont pliées de telle manière qu'elles forment au moins une paroi intérieure à l'intérieur du profil creux.

3. Élément d'absorption de chocs selon la revendication 1 ou la revendication 2,
**caractérisé en ce que :**
une section d'extrémité de lèvre de chaque lèvre réalisée dans la pièce de fabrication, est amenée en butée contre la paroi perpendiculaire à la paroi à partir de laquelle la lèvre est pliée.

4. Élément d'absorption de chocs selon l'une quelconque des revendications précédentes 1 à 3,
**caractérisé en ce que :**
au moins une paroi latérale (7) située perpendiculaire à la paroi (3) dans laquelle la lèvre (4) est découpée, est pressée en contact contre au moins un bord latéral (8) de la ou des lèvres (4) qui se situe à l'intérieur de l'espace intérieur de la pièce de fabrication (1).

5. Élément d'absorption de chocs selon l'une quelconque des revendications précédentes 1 à 4,
**caractérisé en ce que :**
la pièce de fabrication (1) est réalisée en aluminium ou en alliage d'aluminium.

6. Élément d'absorption de chocs selon l'une quelconque des revendications précédentes 1 à 5,
**caractérisé en ce que :**
la pièce de fabrication est réalisée à partir d'une pièce brute extrudée.

7. Procédé destiné à renforcer un élément d'absorption de chocs utilisé dans un véhicule, l'élément étant réalisé à partir d'une pièce de fabrication (1) qui comprend un profilé creux doté de parois et d'un espace intérieur,
**caractérisé en ce que :**
une découpe est pratiquée dans au moins une section d'une paroi (3) d'une pièce de fabrication (1) en formant de ce fait au moins une lèvre (4), qui est pliée en allant en s'éloignant de la paroi, en formant de ce fait au moins une paroi de renfort supplémentaire.

8. Procédé selon la revendication 7,
**caractérisé en ce que :**
la ou les lèvres (4) sont pliées dans l'espace intérieur de la pièce de fabrication.

9. Procédé selon la revendication 7 ou la revendication 8,
**caractérisé en ce que :**
la ou les lèvres sont fixées à l'intérieur de la pièce de fabrication après l'exécution de l'opération de pliage.

10. Procédé selon l'une quelconque des revendications précédentes 7 à 9,
**caractérisé en ce que :**
la pièce de fabrication est réalisée à partir d'une pièce brute extrudée, qui est découpée en pièces de fabrication plus petites.
